# EUROPÄISCHE PATENTSCHRIFT

(11) **EP 2 530 389 B1**
(45) Veröffentlichungstag und Bekanntmachung des Hinweises auf die Patenterteilung: **31.07.2019**
(21) Anmeldenummer: 12004055.5
(22) Anmeldetag: 24.05.2012
(51) Int. Cl.: F24D 13/02, F24D 19/10

(54) **Elektrische Flächenheizvorrichtung**
Electric area heating device
Dispositif de chauffage de surface électrique

(30) Priorität: 31.05.2011 DE 102011103705
(43) Veröffentlichungstag der Anmeldung: 05.12.2012
(73) Patentinhaber: Hemstedt GmbH, 74336 Brackenheim (DE)
(72) Erfinder: Hemstedt, Andreas, 74336 Brackenheim (DE)
(74) Vertreter: Clemens, Gerhard

(56) Entgegenhaltungen:
- EP-A1- 0 304 007
- DE-A1- 19 541 021
- DE-A1-102004 037 410
- US-A- 2 619 580
- US-A- 2 721 247
- US-A- 5 974 226
- US-A1- 2004 099 654

## Beschreibung

### TECHNISCHES GEBIET

Die vorliegende Erfindung betrifft eine elektrischen Flächenheizvorrichtung für innen und/oder außen, insbesondere Fußbodenheizung mit einer Heizleitereinrichtung mit zumindest einem Kaltanschlussbereich mit einer elektrisch leitenden, isolierten Anschlussleitung und einem Heizleitungsbereich mit zumindest einem Heizelement mit einem elektrisch leitenden, isolierten Heizleiter, der bei Spannungsbeaufschlagung eine größenmäßig feste Heizleistung abgibt, einer Schalteinrichtung zum Ein- beziehungsweise Ausschalten der Spannungsbeaufschlagung des Heizleiters, einer Regeleinrichtung zum Betreiben der Heizleitereinrichtung zur Erzielung einer gewünschten eingestellten Umgebungstemperatur und einer Anschlusseinrichtung für die Heizleitereinrichtung zum Anschluss an eine Spannungsquelle, das Heizelement zumindest zwei oder mehrere innerhalb des Heizelements verlaufende Heizleiter aufweist, wobei ein Managementsystem vorhanden ist, das die Zu- und/oder Abschaltung einzelner Heizleiter in Abhängigkeit der jeweiligen Zielvergaben umsetzt und jeder Heizleiter innerhalb des Heizelements separat mit Spannung beaufschlagbar ist, so dass die Heizleiter einzeln oder in einer vorgegebenen Anzahl kombinierbar oder zeitgleich gemeinsam in einem vorgegebenen Zeitintervall mit Spannung beaufschlagbar sind.

### STAND DER TECHNIK

Neben warmwassergebundenen Heizsystemen kommen auch elektrisch betriebene Flächenheizvorrichtungen zum Einsatz. Hierbei werden Widerstandskabel mit einem eingearbeiteten Heizleiter unter, im oder auf dem Estrich verlegt. Wegen der geringen Bauhöhe können derartige elektrische Heizleitereinrichtungen direkt unter Fußbodenbelägen verlegt werden. Aufgrund des relativ geringen Durchmessers der Heizkabel können diese im Klebebett von Fliesen verlegt und sogar unter Laminat eingesetzt werden. Unter Spannungsbeaufschlagung des Heizleiters gibt dieser Wärme ab. Eine Regeleinrichtung, die mit Sensoren zur Erfassung der Umgebungstemperatur verbunden ist, regelt den Heizbetrieb, indem der Heizleiter bei Unterschreiten einer vorgegebenen Temperatur mit Spannung beaufschlagt wird, wobei nach Überschreiten der vorgegebenen Temperatur die Spannungsbeaufschlagung abgeschaltet wird. Sobald die vorgegebene Temperatur wieder unterschritten wird, wird der Heizleiter erneut aktiviert.

In der US 2004/099654 A1 ist eine elektrische Flächenheizvorrichtung mit den Merkmalen des Oberbegriffs des Anspruchs 1 beschrieben. Dabei ist ein erstes Heizelement vorhanden, das aus parallel beabstandet zwischen zwei Anschlussleitungen verlaufenden Heizleitern besteht und eine zweites Heizelement aufweist, dass ebenfalls parallel beabstandete zwischen zwei Anschlussleitungen verlaufende Heizleiter aufweist, wobei die Heizleiter in Längsrichtung alternierend zwischen dem ersten Heizelement und zweiten Heizelement angeordnet sind. Das erste Heizelement und das zweite Heizelement jeweils mit seinen Heizleitern kann dabei über eine Schalteinrichtung getrennt angesteuert werden, wobei die Heizleistung des ersten beziehungsweise zweiten Heizelementes selbst nicht variierbar ist. Die flächenmäßige Heizleistung kann dadurch variiert werden, dass entweder das erste und/oder zweite Heizelement geschaltet wird. Des Weiteren weisen die Heizelemente insgesamt eine starre rechteckförmige Umfangskontur auf.

### DARSTELLUNG DER ERFINDUNG

Ausgehend von dem genannten Stand der Technik liegt der vorliegenden Erfindung die Aufgabe zugrunde, eine elektrische Flächenheizvorrichtung der eingangs genannten Art für innen und/ oder außen, insbesondere Fußbodenheizung anzugeben, die energiesparend betrieben werden kann, an die jeweiligen Temperaturverhältnisse variabel anpassbar ist, wirtschaftlich hergestellt werden kann und in der üblichen Verlegetechnik verlegt werden kann.

Die erfindungsgemäße elektrische Flächenheizvorrichtung ist durch die Merkmale des unabhängigen Anspruchs 1 gegeben. Vorteilhafte Ausgestaltungen und Weiterbildungen sind Gegenstand der von dem unabhängigen Anspruch 1 direkt oder indirekt abhängigen Ansprüche.

Die erfindungsgemäße elektrische Flächenheizvorrichtung zeichnet sich demgemäß dadurch aus, dass die Verbindung der Kaltanschlussbereiche mit den Heizleitungsbereichen der Heizleitereinrichtung mittels Muffen, insbesondere in Schrumpftechnik oder Schraubtechnik, zum Beispiel Trockenmuffen oder Vergussmuffen, oder in muffenloser Technik, das heißt, mit direkt leitender Verbindung mittels Lötung, Schweißung oder Klebung ausgebildet ist, die Heizleiter, gegebenenfalls der Rückleiter, von einem elektrisch isolierenden Isoliermantel umgeben sind und die Heizleiter, der Rückleiter und ein gegebenenfalls vorhandener Schutzleiter insgesamt in eine elektrisch isolierende Aderisolierung eingebettet sind, die Schalteinrichtung so ausgebildet ist, dass sie über eine Fernsteuerung oder Datenleitung ansteuerbar ist, wodurch die Flächenheizvorrichtung direkt vom Strom erzeugenden Unternehmen ansteuerbar ist, um Unterkapazitäten oder Überkapazitäten durch das Zu- oder Abschalten einzelner Heizleiter zu berücksichtigen.

Eine vorteilhafte Ausgestaltung zeichnet sich dadurch aus, dass die zumindest zwei oder mehreren Heizleiter dieselbe elektrische Heizleistung aufweisen.

In einer alternativen vorteilhaften Weiterbildung werden zumindest zwei oder mehrere Heizleiter eingesetzt, die unterschiedliche elektrische Heizleistungen aufweisen. Bei der Verwendung von zwei Heizleitern kann beispielsweise ein Heizleiter eingesetzt werden, der Leistungen im Bereich von 80 bis 60 % und ein zweiter Heizleiter, der Leistungen im Bereich von 20 bis 40 % der Gesamtheizleistung erbringt.

Die Gesamtheizleistung der Heizleiter liegt bevorzugt im Bereich zwischen 40 bis 200 W/m², was in vielen Fällen für Wohnungen ausreicht, um die erforderliche Temperatur zu erreichen und zu halten.

Es können einfache bekannte Thermostate genutzt werden in Kombination mit der Schalteinrichtung, mittels derer die einzelnen Heizleiter ansprechbar sind. Über diese Schalteinrichtung, die bevorzugt als Serienschalter ausgebildet ist, kann nach Bedarf oder Anforderung die Leistung der Flächenheizvorrichtung bestimmt werden. Ein weiterer Vorteil der Flächenheizvorrichtung mit mehreren Heizleitern besteht darin, dass bei Beschädigung gegebenenfalls noch Reservekreise vorhanden sind und daher weiterhin eine Heizmöglichkeit zur Verfügung steht.

In einem praktischen Ausführungsbeispiel werden für ein schnelles Aufheizen alle Heizleiter geschaltet, wobei nach Erreichen der Solltemperatur die Flächenheizvorrichtung in einen Stromsparmodus umschaltet, das heißt es bleibt zumindest ein Heizleiter in Betrieb, der eine geringe Leistungsaufnahme aufweist, wobei die geringere Leistung ausreicht, um beispielsweise die geforderte Bodentemperatur zu halten. Es ist erfindungsgemäß möglich, dass die Flächenheizvorrichtung direkt vom Strom erzeugenden Unternehmen angesteuert werden kann, um Unterkapazitäten oder Überkapazitäten im Stromnetz zu berücksichtigen beziehungsweise zu nutzen. So kann beispielsweise ein Energieversorgungsunternehmen über einen Rundsteuerempfänger (Prinzip Nachtspeicherheizung) in Bedarfsfall den Verbrauch reduzieren, indem beispielsweise ein Heizleiter abgeschaltet wird, ohne das die gesamte Heizleistung auf Null reduziert wird, da der zumindest eine weitere Heizleiter noch Wärmeenergie abgibt. Auch können gezielt Überkapazitäten (Stromüberschuss) an die Flächenheizvorrichtungen in Bedarfsfall zu Speicherzwecken abgegeben werden. Als einen weiteren Vorteil für ein Strom erzeugendes Unternehmen ist anzuführen, dass keine Phasenschnittsteuerung notwendig ist, welche die sinusförmige Netzspannung schädigt.

Im Heizbetrieb fließt wahlweise ein oder mehrere Ströme - die Einspeisung erfolgt über so genannte Kaltenden (Anschlussleitungen) - durch einen oder mehrere Heizleiter.

Eine vorteilhafte Ausgestaltung zeichnet sich dadurch aus, dass an einem Ende des Heizelements der Heizleitereinrichtung ein Kaltanschlussbereich vorhanden ist, wobei das Heizelement zumindest einen Rückleiter aufweist, an den die Heizleiter an dem freien Endpunkt elektrisch leitend angeschlossen sind und dieser Endpunkt mittels einer Endkappe elektrisch isoliert ausgebildet ist. An dem freien Endpunkt werden somit die Heizleiter elektrisch mit dem Rückleiter verbunden, was bereits während der Fabrikation erfolgt und anschließend wird innerhalb der Fabrikation auch der Endpunkt mit einer Endkappe elektrisch isoliert. Somit ist nur eine Anschlussleitung im Kaltanschlussbereich vorhanden.

Eine alternative Ausgestaltung zeichnet sich dadurch aus, dass auf den Rückleiter verzichtet wird und an beiden Enden des Heizelements der Heizleitereinrichtung ein Kaltanschlussbereich mit Anschlussleitungen zum Anschluss an eine Anschlusseinrichtung vorhanden ist. Als Vorteil bei dieser Ausführungsart ist zu nennen, dass dadurch eine kostengünstige Herstellung möglich ist, wobei die Muffenverbindungen zum Verbinden des Heizleiterbereiches mit dem Kaltanschlussbereich aufgrund der geringeren Aderanzahl schlanker ausfällt. Es muss jedoch dabei in Kauf genommen werden, dass elektromagnetische Felder auftreten und bei der Installation zwei Anschlussleitungen angeschlossen werden müssen.

Prinzipiell kann die Anzahl der Heizleiter "beliebig" hoch sein, wobei in der Praxis die Maximalanzahl der Heizleiter durch die einzuhaltenden Durchmesser der Heizleitungen begrenzt ist.

Bei einer Vielzahl von Heizleitern können somit auch geringe Unterschiede zwischen den Leistungen der einzelnen Heizkreise realisiert werden, das heißt es ist eine Feinabstimmung mit besonders hohen Genauigkeiten möglich.

Bevorzugt ist in dem Heizelement ein Schutzleiter vorhanden, der einen elektrisch sicheren Betrieb in Verbindung mit einem Schirm zu Erdungszwecken gewährleistet.

Zur besseren Unterscheidung kann über eine Bedruckung oder farbliche Kennzeichnung des Heizelements eine Unterscheidung der Heizkreise erfolgen.

Die erfindungsgemäße Flächenheizvorrichtung ist stromsparend und dadurch zeitgemäß, insbesondere in Hinblick auf die derzeit kritische Situation der Energieversorgung durch Technologien, die keine Akzeptanz innerhalb der Bevölkerung haben. Ökologisch betrachtet bietet die erfindungsgemäße Flächenheizvorrichtung optimierte Einsatzmöglichkeiten und ist hervorragend geeignet den Einsatz regenerativer Energien zu ermöglichen.

Mit der erfindungsgemäßen Flächenheizvorrichtung ergeben sich auch besondere Vorteile bei der Nutzung von grünem Strom (gewonnen durch Photovoltaik und/oder Windkraft): In Verbindung mit einer Photovoltaik- und/oder Windkraftanlage kann Energie in Form von Wärme im Boden gespeichert werden. Aufgrund der mehrfachen Heizleiter (Heizwiderstände) steht mehr Kapazität zur Speicherung zur Verfügung. Die gespeicherte Wärme kann dann zu einem späteren Zeitpunkt wieder abgezogen werden. Auch bei geringer Stromerzeugung (abends, Bewölkung) kann aufgrund des geringeren Stromverbrauches ein Heizbetrieb durch entsprechende Schaltung von Heizleitern gewährleistet werden.

Durch den Einbau mehrerer separat ansprechenbarer Heizleiter in einem Heizelement kann problemlos festgelegt werden, welche Leistung die Flächenheizvorrichtung - je nach Klimazone - abgeben soll.

Als wesentlichster Vorteil ist festzuhalten, dass mit der erfindungsgemäßen Heizvorrichtung beziehungsweise der erfindungsgemäßen Heizleitereinrichtung eine Reduzierung des elektrischen Verbrauchs im Vergleich zu herkömmlichen Flächenheizvorrichtungen mit nur einem Heizleiter erzielt werden kann.

Weitere Ausführungsformen und Vorteile der Erfindung ergeben sich durch die in den Ansprüchen ferner aufgeführten Merkmale sowie durch die nachstehend angegebenen Ausführungsbeispiele.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: stark schematisierte Darstellung einer Flächenheizvorrichtung mit einer Heizleitereinrichtung mit einem mäanderförmig angeordneten Heizelement mit einer Anschlussleitung, die an eine Anschlusseinrichtung angeschlossen ist, wobei eine Regeleinrichtung, eine ortsfeste Schalteinrichtung und eine externe Schalteinrichtung vorhanden ist und das Heizelement mehrere Heizleiter aufweist,
- Fig. 2: Schnitt durch ein Heizelement mit zwei Heizleitern, einem Rückleiter und einem Schutzleiter,
- Fig. 3: Querschnitt durch ein Heizelement mit vier Heizleitern, einem Rückleiter und einem Schutzleiter,
- Fig. 4: schematische Abwicklungsdarstellung eines abgewickelten Heizelements mit einem Aufbau gemäß Fig. 2 und einer Anschlussleitung,
- Fig. 5: schematischer Querschnitt durch ein Heizelement mit zwei Heizleitern und einem Schutzleiter,
- Fig. 6: schematische Abwicklung des Heizelements gemäß Fig. 5 mit einer Anschlussleitung an beiden Enden und
- Fig. 7: schematisches Heizleistungs-Zeitdiagramm bei unterschiedlicher Beaufschlagung zweier Heizleiter in zeitlicher Abfolge.

### WEGE ZUM AUSFÜHREN DER ERFINDUNG

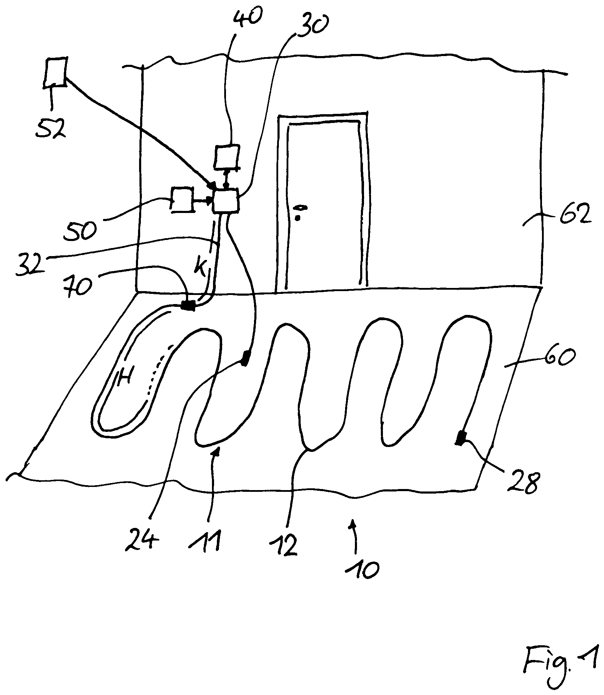

In Fig. 1 ist stark schematisiert die Raumsituation einer verlegten Flächenheizvorrichtung 10 dargestellt, die unterhalb eines Fußbodens 60 verlegt ist. An den Fußboden 60 schließt eine Wand 62 an. Die Flächenheizvorrichtung 10 weist eine Heizleitereinrichtung 11 auf, die ein mäanderförmig verlegtes Heizelement 12 besitzt.

Die Heizleitereinrichtung 11 weist einen unterhalb des Fußbodens 60 verlegten Heizleitungsbereich H (Heizelement 12) auf, der über eine Muffenverbindung 70 mit einem Kaltleitungsbereich K verbunden ist, wobei der Kaltleitungsbereich K durch eine Anschlussleitung 32 gebildet ist, die in der Wand 62 nach oben geführt ist und an einer Anschlusseinrichtung 30 angeschlossen ist, die wiederum an ein Spannungsnetz angeschlossen ist.

Auf die Anschlusseinrichtung 30 wirkt eine Regeleinrichtung 40 (Thermostat) ein, die den Betrieb der Flächenheizvorrichtung 10 regelt. Zu diesem Zweck ist in dem Fußboden 60 eine Sensoreinheit 24 vorhanden, die mit der Anschlusseinrichtung 30 beziehungsweise der Regeleinheit 40 in Verbindung steht.

Darüber hinaus sind in Fig. 1 noch eine ortsfeste, an der Wand 62 angeordnete Schalteinrichtung 50 und eine schematisch dargestellte externe Schalteinrichtung 52 dargestellt.

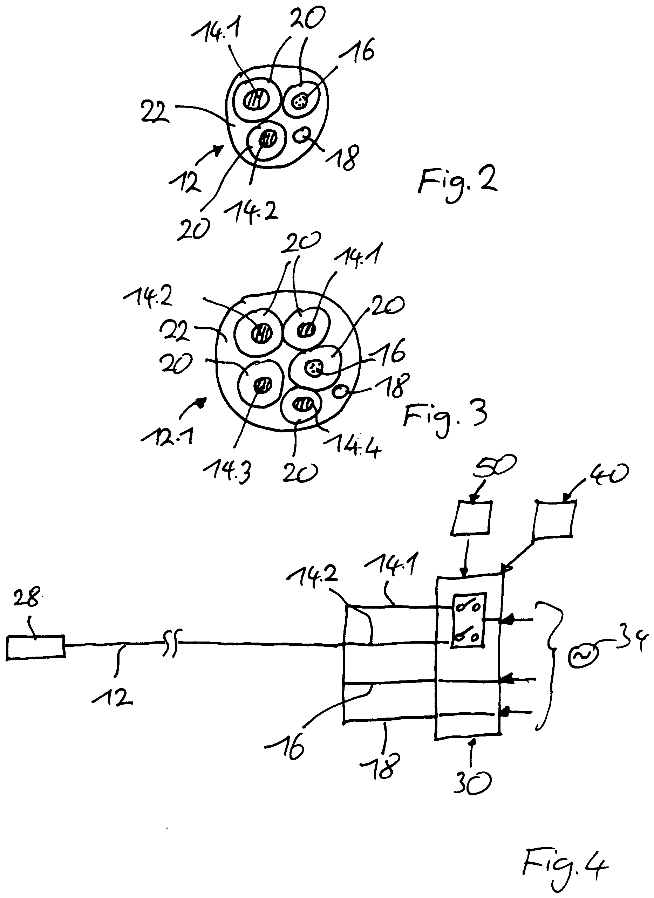

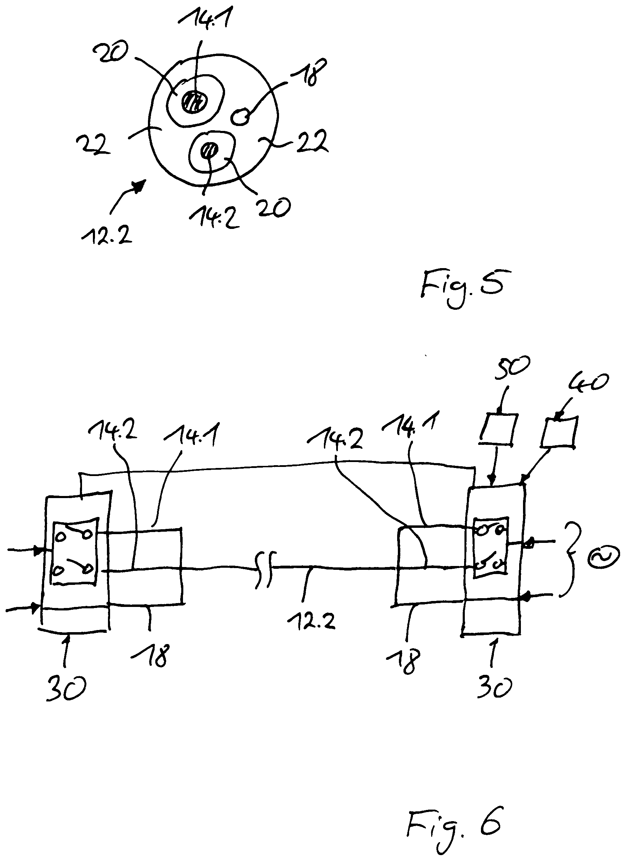

Das Heizelement 12 weist mehrere Heizleiter 14.1, 14.2 (siehe Fig. 2 und Fig. 5) beziehungsweise 14.1, 14.2, 14.3, 14.4 (siehe Fig. 3) auf, die über die Schalteinrichtung 50 beziehungsweise 52 aktiviert beziehungsweise deaktiviert werden können.

Ein Ausführungsbeispiel eines Heizelements 12 ist in der Fig. 2 dargestellt. Das Heizelement 12 besitzt zwei Heizleiter 14.1, 14.2, die von einem Isoliermantel 20 umgeben sind. Weiterhin ist ein Rückleiter 16 vorhanden der ebenfalls in einem Isoliermantel 20 umgeben ist. Schließlich verläuft innerhalb des Heizelements 12 noch ein Schutzleiter 18. Die beiden Heizleiter 14.1, 14.2, der Rückleiter 16 und der Schutzleiter 18 sind von einer Aderisolierung 22 umgeben. Die beiden Heizleiter 14.1, 14.2 sind im freien Endbereich des Heizelements 12 mit dem Rückleiter 16 elektrisch leitend verbunden, wobei in diesem Endbereich eine isolierende Endkappe 28 (siehe Fig. 1) vorhanden ist.

Durch das Vorsehen eines Rückleiters 16 ist es möglich, dass die Heizleitereinrichtung 11 über nur eine Anschlussleitung 32 an die Anschlusseinrichtung 30 angeschlossen werden kann. Die Verbindung der Anschlussleitung 32 (Kaltanschlussbereich K) mit dem Heizelement 12 (Heizleitungsbereich H) kann entweder in Muffentechnologie (Muffenverbindung 70 in Fig. 1) oder muffenloser Technologie ausgebildet sein. Die muffenlose Verbindungstechnologie wird bevorzugt eingesetzt, da diese geringe Querschnittsdicken benötigt, so dass die Heizleitereinrichtung 11 insbesondere in der Klebeschicht für Fliesen verlegt werden kann. Zum Anschluss der Heizleiter 14 an einen Kaltleiter in der Anschlussleitung 32 werden diese direkt leitend beispielsweise mittels Lötung, Schweißung oder Klebung miteinander verbunden. Diese Technologie ist in dem deutschen Patent Nr. 195 41 021 beschrieben.

Mittels der Schalteinrichtung 50 ist es möglich, die beiden Heizleiter 14.1 beziehungsweise 14.2 jeweils getrennt für sich oder gemeinsam zu aktivieren beziehungsweise zu deaktivieren. So ist es beispielsweise möglich zur raschen Erzielung bei Beginn der Heizphase einer hohen Temperatur beide Heizleiter 14.1 und 14.2 zu aktivieren. Nach Erreichen der gewünschten Temperatur kann ein Heizleiter 14.2 deaktiviert werden und die Aufrechterhaltung der Temperatur erfolgt mittels des noch aktivierten Heizleiters 14.1.

In diesem dargestellten Fall werden die Heizleiter 14.1 beziehungsweise 14.2 manuell geschaltet. Es ist auch möglich, dass die Heizleiter über eine Steuereinrichtung geschaltet werden, die in Abhängigkeit der jeweiligen Temperatur Heizleiter 14.1 , 14.2 zubeziehungsweise abschaltet. Die übergeordnete Regelung übernimmt die Regelungseinheit 40.

Über die externe Schalteinrichtung 52, die mit der Anschlusseinrichtung beziehungsweise der Regeleinrichtung 40 drahtlos in Verbindung steht, kann erfindungsgemäß ein Energieversorgungsunternehmen auf die Flächenheizvorrichtung 10 zugreifen und im Falle von Netzproblemen den Leistungsverbrauch der Flächenheizvorrichtung 10 durch Abschalten einzelner Heizleiter 14 reduzieren, ohne jedoch die Heizleitereinrichtung 11 komplett abschalten zu müssen. Durch die übrigen noch geschalteten Heizleiter 14 kann die Beheizung aufrechterhalten werden. Über die externe Schalteinrichtung 52 können gezielt Überkapazitäten (Stromüberschüsse) von den Energieversorgungsunternehmen gezielt an Flächenheizungen abgegeben werden, wobei diese gespeicherte Wärmeenergie gegebenenfalls im Bedarfsfall wieder zurückgewonnen werden kann.

In Verbindung mit Photovoltaik- und Windkraftanlagen kann Energie in Form von Wärme im Boden gespeichert werden. Aufgrund der Vielzahl von vorhandenen Heizelementen 14 (zumindest zwei) können Kapazitätsschwankungen ausgeglichen werden. Auch bei geringer Stromerzeugung (zum Beispiel abends oder bei Bewölkung) kann aufgrund des geringeren Stromverbrauchs ein Heizbetrieb gewährleistet werden, indem eine entsprechende Anzahl an Heizleiter 14 abgeschaltet wird.

In Fig. 3 ist ein zweites Ausführungsbeispiel eines Heizelements 12.1 in Querschnitt dargestellt, das sich von dem Ausführungsbeispiel gemäß Fig. 2 dadurch unterscheidet, dass vier Heizleiter 14.1, 14.2, 14.3, 14.4 vorhanden sind.

In Fig. 4 ist stark schematisiert ein abgewickeltes Heizelement 12 mit dem Querschnitt gemäß Fig. 2 dargestellt. Das Heizelement 12 besitzt zwei Heizleiter 14.1, 14.2, die im Bereich der Endkappe 28 elektrisch leitend mit dem Rückleiter 16 verbunden sind, wobei zusätzlich noch ein Schutzleiter 18 angeordnet ist. Die beiden Heizleiter 14.1, 14.2 werden somit über den Rückleiter (Kaltleiter) 16 zurückgeführt und innerhalb der Anschlusseinrichtung 30 angeschlossen. Dabei ist der Anschluss der Heizleiter 14.1, 14.2 so ausgestaltet, dass über die Schalteinrichtung 50 die jeweiligen Heizleiter 14.1 beziehungsweise 14.2 separat und individuell geschaltet werden können. Die Anschlusseinrichtung 30 selbst ist an eine Spannungsquelle 34 angeschlossen.

In Fig. 5 ist schematisch im Querschnitt eine dritte Ausführungsform eines Heizelements 12.2 dargestellt, das sich von dem Heizelement 12 gemäß Fig. 12 dadurch unterscheidet, dass kein Rückleiter 16 vorhanden ist. Dies hat zur Folge, dass beide Enden des Heizelements 12.2 an die Anschlusseinrichtung 30 angeschlossen werden müssen, was in Fig. 6 stark schematisiert dargestellt ist. Auch bei dieser Ausführungsform können die beiden Heizleiter 14.1 beziehungsweise 14.2 über die Schalteinrichtung 50 separat geschaltet werden.

Grundsätzlich kann die Anzahl der Heizleiter 14 beliebig hoch sein, wobei jedoch die Maximalanzahl innerhalb eines Heizelements 12 durch die in der Praxis einzuhaltenden maximalen Durchmesser begrenzt ist. Durch eine Vielzahl an Heizleitern können auch geringe Unterschiede zwischen den Leistungen der einzelnen Heizkreise realisiert werden, wodurch sich vorteilhafte Energiespareffekte erzielen lassen.

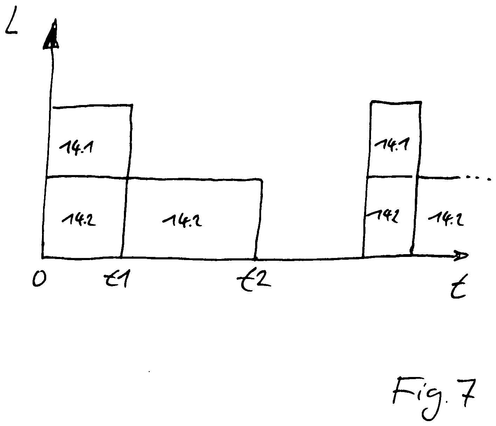

In Fig. 7 ist stark schematisiert an einem Diagramm beispielhaft der zeitliche Ablauf der Einschaltung eines Heizelements mit zwei Heizleitern 14.1, 14.2 dargestellt, wobei auf der Koordinate die Heizleistung L und auf der Abszisse die Zeit t dargestellt ist. Zu Beginn des Heizvorgangs werden bis zum Zeitpunkt t1 beide Heizleiter 14.1, 14.2 geschaltet. Ist zum Zeitpunkt t1 die gewünschte Temperatur erreicht, wird entweder über die Schalteinrichtung 50 manuell oder über eine Steuereinrichtung der Heizleiter 14.1 abgeschaltet und die Temperatur wird über den verbleibenden Heizleiter 14.2 aufrechterhalten. Es kann auch Phasen geben, wie beispielsweise ab Erreichen des Zeitpunktes t2, dass beide Heizleiter 14.1 und 14.2 abgeschaltet sind.

## Patentansprüche

1. Elektrische Flächenheizvorrichtung (10) für innen und/oder außen, insbesondere Fußbodenheizung mit
- einer Heizleitereinrichtung (11) mit
-- zumindest einem Kaltanschlussbereich (K) mit einer elektrisch leitenden, isolierten Anschlussleitung (32) und
-- einem Heizleitungsbereich (H) mit zumindest einem Heizelement (12) mit einem elektrisch leitenden, isolierten Heizleiter (14), der bei Spannungsbeaufschlagung eine größenmäßig feste Heizleistung abgibt,
- einer Schalteinrichtung (50,52) zum Ein- beziehungsweise Ausschalten der Spannungsbeaufschlagung des Heizleiters (14),
- einer Regeleinrichtung (40) zum Betreiben der Heizleitereinrichtung (11) zur Erzielung einer gewünschten eingestellten Umgebungstemperatur und
- einer Anschlusseinrichtung (30) für die Heizleitereinrichtung (11) zum Anschluss an eine Spannungsquelle,
- das Heizelement (12) zumindest zwei oder mehrere innerhalb des Heizelements (12) verlaufende Heizleiter (14.1, 14.2, 14.3, 14.4) aufweist,
- wobei ein Managementsystem vorhanden ist, das die Zu- und/oder Abschaltung einzelner Heizleiter (14.1, 14.2,14.3, 14.4) in Abhängigkeit der jeweiligen Zielvergaben umsetzt und jeder Heizleiter (14.1, 14.2, 14.3, 14.4) innerhalb des Heizelements (12) separat mit Spannung beaufschlagbar ist, so dass die Heizleiter (14.1, 14.2, 14.3, 14.4) einzeln oder in einer vorgegebenen Anzahl kombinierbar oder zeitgleich gemeinsam in einem vorgegebenen Zeitintervall mit Spannung beaufschlagbar sind
- **dadurch gekennzeichnet, dass**
- die Verbindung der Kaltanschlussbereiche (K) mit den Heizleitungsbereichen (H) der Heizleitereinrichtung (11) mittels Muffen, insbesondere in Schrumpftechnik oder Schraubtechnik, zum Beispiel Trockenmuffen oder Vergussmuffen, oder in muffenloser Technik, das heißt, mit direkt leitender Verbindung mittels Lötung, Schweißung oder Klebung ausgebildet ist,
- die Heizleiter (14.1, 14.2), gegebenenfalls der Rückleiter (16), von einem elektrisch isolierenden Isoliermantel (20) umgeben sind und die Heizleiter (14.1, 14.2, 14.3, 14.4), der Rückleiter (16) und ein gegebenenfalls vorhandener Schutzleiter (18) insgesamt in eine elektrisch isolierende Aderisolierung (22) eingebettet sind,
- die Schalteinrichtung (50,52) so ausgebildet ist, dass sie über eine Fernsteuerung oder Datenleitung ansteuerbar ist, wodurch die Flächenheizvorrichtung (10) direkt vom Strom erzeugenden Unternehmen ansteuerbar ist, um Unterkapazitäten oder Überkapazitäten durch das Zu- oder Abschalten einzelner Heizleiter (14.1, 14.2, 14,3, 14.4) zu berücksichtigen.

2. Flächenheizvorrichtung nach Anspruch 1,
- **dadurch gekennzeichnet, dass**
- die zumindest zwei oder mehreren Heizleiter (14.1, 14.2, 14.3, 14.4) dieselbe elektrische Heizleistung aufweisen.

3. Flächenheizvorrichtung nach Anspruch 1,
- **dadurch gekennzeichnet, dass**
- die zumindest zwei oder mehreren Heizleiter (14.1, 14.2, 14.3, 14.4) in der Größe unterschiedliche elektrische Heizleistungen aufweisen.

4. Flächenheizvorrichtung nach Anspruch 3,
- **dadurch gekennzeichnet, dass**
- zwei Heizleiter (14.1, 14.2) vorhanden sind, wobei ein Heizleiter 80 bis 60 % und der andere Heizleiter (14.2) 20 bis 40 % der Gesamtheizleistung erbringt.

5. Flächenheizvorrichtung nach einem oder mehreren der vorstehenden Ansprüche,
- **dadurch gekennzeichnet, dass**
- die Gesamtheizleistung der Heizleiter (14.1, 14.2, 14.3, 14.4) im Bereich zwischen 40 bis 200 W/m² liegt.

6. Flächenheizvorrichtung nach einem oder mehreren der vorstehenden Ansprüche,
- **dadurch gekennzeichnet, dass**
- an einem Ende des Heizelements (12) der Heizleitereinrichtung (11) ein Kaltanschlussbereich (K) vorhanden ist, wobei das Heizelement (12) zumindest einen Rückleiter (16) aufweist, an den die Heizleiter (14.1, 14.2, 14.3, 14.4) an dem freien Endpunkt elektrisch leitend angeschlossen sind und dieser Endpunkt mittels einer Endkappe (28) elektrisch isoliert ausgebildet ist.

7. Flächenheizvorrichtung nach einem oder mehreren der vorstehenden Ansprüche 1 bis 5,
- **dadurch gekennzeichnet, dass**
- an beiden Enden des Heizelements (12) der Heizleitereinrichtung (11) ein Kaltanschlussbereich (K) vorhanden ist.

8. Flächenheizvorrichtung nach einem oder mehreren der vorstehenden Ansprüche,
- **dadurch gekennzeichnet, dass**
- die Heizleitereinrichtung (11) zumindest bereichsweise als Heizmatteneinrichtung mit mäanderförmig verlaufendem Heizelement (12) ausgebildet ist.

9. Flächenheizvorrichtung nach einem oder mehreren der vorstehenden Ansprüche,
- **dadurch gekennzeichnet, dass**
- die Heizleitereinrichtung (11) einen Schutzleiter (18) aufweist.

10. Flächenheizvorrichtung nach Anspruch 1,
- **dadurch gekennzeichnet, dass**
- außenseitig an der Heizleitereinrichtung (11) beziehungsweise deren Aderisolierung (22) eine Bedruckung oder farbliche Kennzeichnung zur Unterscheidung unterschiedlicher Heizleistungswerte vorhanden ist.

## Claims

1. Electric surface heating apparatus (10) for interior and/or exterior use, in particular underfloor heating, having
- a heat conductor device (11) with
-- at least one cold connection region (K) with an electrically conducting, insulated connection line (32) and
-- a heat conducting region (H) with at least one heating element (12) with an electrically conducting, insulated heat conductor (14) which outputs a largely fixed heating power when voltage is applied,
- a switching device (50, 52) for switching on and switching off the voltage applied to the heat conductor (14),
- a control device (40) for operating the heat conductor device (11) for achieving a desired set ambient temperature and
- a connection device (30) for the heat conductor device (11) for connection to a voltage source,
- the heating element (12) has at least two or more heat conductors (14.1, 14.2, 14.3, 14.4) which run within the heating element (12),
- wherein a management system is present which turns on and/or turns off individual heat conductors (14.1, 14.2, 14.3, 14.4) depending on the respective target allocations and voltage can be applied separately to each heat conductor (14.1, 14.2, 14.3, 14.4) within the heating element (12), with the result that voltage can be applied to the heat conductors (14.1, 14.2, 14.3, 14.4) individually or in a combinable manner in a prespecified number or together at the same time during a prespecified time interval,
- **characterized in that**
- the connection of the cold connection regions (K) to the heat conducting regions (H) of the heat conductor device (11) is formed by means of connectors, in particular using shrink-fit technology or screw technology, for example dry connectors or potted connectors, or using connector-free technology, that is to say directly conductive connection by means of soldering, welding or adhesive bonding,
- the heat conductors (14.1, 14.2), possibly the return conductor (16), are surrounded by an electrically insulating insulation sheath (20) and the heat conductors (14.1, 14.2, 14.3, 14.4), the return conductor (16) and a protective conductor (18) which may be present are embedded altogether into an electrically insulating core insulation (22),
- the switching device (50, 52) is formed such that it can be actuated by means of a remote control arrangement or data line, as a result of which the surface heating apparatus (10) can be actuated directly by the power-generating company in order to take into account undercapacities or overcapacities due to individual heat conductors (14.1, 14.2, 14.3, 14.4) being turned on or turned off.

2. Surface heating apparatus according to Claim 1,
- **characterized in that**
- the at least two or more heat conductors (14.1, 14.2, 14.3, 14.4) have the same electrical heating power.

3. Surface heating apparatus according to Claim 1,
- **characterized in that**
- the at least two or more heat conductors (14.1, 14.2, 14.3, 14.4) have electrical heating powers of different magnitude.

4. Surface heating apparatus according to Claim 3,
- **characterized in that**
- two heat conductors (14.1, 14.2) are present, wherein one heat conductor provides 80 to 60% of the total heating power and the other heat conductor (14.2) provides 20 to 40% of the total heating power.

5. Surface heating apparatus according to one or more of the preceding claims,
- **characterized in that**
- the total heating power of the heat conductors (14.1, 14.2, 14.3, 14.4) lies in the range of between 40 and 200 W/m².

6. Surface heating apparatus according to one or more of the preceding claims,
- **characterized in that**
- a cold connection region (K) is present at one end of the heating element (12) of the heat conductor device (11), wherein the heating element (12) has at least one return conductor (16) to which the heat conductors (14.1, 14.2, 14.3, 14.4) are electrically conductively connected at the free end point, and this end point is formed in an electrically insulated manner by means of an end cap (28).

7. Surface heating apparatus according to one or more of the preceding Claims 1 to 5,
- **characterized in that**
- a cold connection region (K) is present at both ends of the heating element (12) of the heat conductor device (11).

8. Surface heating apparatus according to one or more of the preceding claims,
- **characterized in that**
- the heat conductor device (11) is formed, at least in regions, as a heating mat device with a heating element (12) which runs in a meandering manner.

9. Surface heating apparatus according to one or more of the preceding claims,
- **characterized in that**
- the heat conductor device (11) has a protective conductor (18).

10. Surface heating apparatus according to Claim 1,
- **characterized in that**
- a printing or coloured identifier for distinguishing between different heating power values is present on the outside of the heat conductor device (11) or the core insulation (22) of the said heat conductor device.

## Revendications

1. Arrangement de chauffage électrique de surface (10) pour l'intérieur et/ou l'extérieur, notamment chauffage au sol, comprenant
- un dispositif conducteur chauffant (11) comprenant
-- au moins une zone de raccordement de froid (K) ayant une conduite de raccordement (32) isolée électriquement conductrice et
-- une zone de conduite chauffante (H) avec au moins un élément chauffant (12) ayant un conducteur chauffant (14) isolé électriquement conducteur qui délivre une puissance de chauffage de valeur fixe lors d'une alimentation en tension,
- un dispositif de commutation (50, 52) destiné à mettre en circuit ou hors circuit l'alimentation en tension du conducteur chauffant (14),
- un dispositif de régulation (40) destiné à faire fonctionner le dispositif conducteur chauffant (11) en vue de parvenir à une température ambiante réglée souhaitée et
- un dispositif de raccordement (30) pour le dispositif conducteur chauffant (11) servant au raccordement à une source de tension,
- l'élément chauffant (12) possède au moins deux conducteurs chauffants (14.1, 14.2, 14.3, 14.4) ou plus qui s'étendent à l'intérieur de l'élément chauffant (12),
- un système de gestion étant présent, lequel réalise la mise en circuit et/ou hors circuit des conducteurs chauffants (14.1, 14.2, 14.3, 14.4) individuels en fonction des objectifs respectifs et chaque conducteur chauffant (14.1, 14.2, 14.3, 14.4) au sein de l'élément chauffant (12) pouvant être alimenté séparément en tension, de sorte que les conducteurs chauffants (14.1, 14.2, 14.3, 14.4) peuvent être alimentés en tension individuellement ou de manière combinable en un nombre prédéfini ou simultanément en commun dans un intervalle de temps prédéfini
- **caractérisé en ce que**
- la liaison des zones de raccordement de froid (K) avec les zones de conduite chauffante (H) du dispositif conducteur chauffant (11) est réalisée au moyen de manchons, notamment dans une technique d'emmanchement à chaud ou dans une technique de vissage, par exemple des manchons secs ou des manchons de scellement, ou dans une technique sans manchon, c'est-à-dire avec une liaison directement conductrice par brasage, soudage ou collage,
- les conducteurs chauffants (14.1, 14.2), le cas échéant le conducteur de retour (16), sont entourés d'une enveloppe isolante (20) électriquement isolante et les conducteurs chauffants (14.1, 14.2, 14.3, 14.4), le conducteur de retour (16) et un conducteur de protection (18) éventuellement présent sont tous incorporés dans une isolation de brins (22) électriquement isolante,
- le dispositif de commutation (50, 52) est configuré de telle sorte qu'il peut être commandé par le biais d'une commande à distance ou d'une ligne de données, moyennant quoi l'arrangement de chauffage de surface (10) peut être commandé directement par des entreprises de production d'électricité afin de tenir compte des sous-capacités ou des surcapacités résultant de la mise en circuit ou hors circuit des conducteurs chauffants (14.1, 14.2, 14.3, 14.4) individuels.

2. Arrangement de chauffage de surface selon la revendication 1, **caractérisé en ce que** les au moins deux conducteurs chauffants (14.1, 14.2, 14.3, 14.4) ou plus présentent la même puissance de chauffage électrique.

3. Arrangement de chauffage de surface selon la revendication 1, **caractérisé en ce que** les au moins deux conducteurs chauffants (14.1, 14.2, 14.3, 14.4) ou plus présentent des puissances de chauffage électriques de valeurs différentes.

4. Arrangement de chauffage de surface selon la revendication 3, **caractérisé en ce que** deux conducteurs chauffants (14.1, 14.2) sont présents, un conducteur chauffant apportant 80 à 60 % de la puissance de chauffage totale et l'autre conducteur chauffant (14.2) 20 à 40 %.

5. Arrangement de chauffage de surface selon une ou plusieurs des revendications précédentes, **caractérisé en ce que** la puissance de chauffage totale des conducteurs chauffants (14.1, 14.2, 14.3, 14.4) est comprise dans la plage entre 40 et 200 W/m².

6. Arrangement de chauffage de surface selon une ou plusieurs des revendications précédentes, **caractérisé en ce qu'**une zone de raccordement de froid (K) se trouve à une extrémité de l'élément chauffant (12) du dispositif conducteur chauffant (11), l'élément chauffant (12) possédant au moins un conducteur de retour (16) auquel les conducteurs chauffants (14.1, 14.2, 14.3, 14.4) sont raccordés de manière électriquement conductrice au niveau du point d'extrémité libre et ce point d'extrémité est configuré électriquement isolé au moyen d'un capuchon d'extrémité (28).

7. Arrangement de chauffage de surface selon une ou plusieurs des revendications précédentes 1 à 5, **caractérisé en ce qu'**une zone de raccordement de froid (K) se trouve aux deux extrémités de l'élément chauffant (12) du dispositif conducteur chauffant (11).

8. Arrangement de chauffage de surface selon une ou plusieurs des revendications précédentes, **caractérisé en ce que** le dispositif conducteur chauffant (11) est configuré au moins dans certaines zones sous la forme d'un dispositif de tapis chauffant comprenant un élément chauffant (12) qui s'étend sous une forme sinueuse.

9. Arrangement de chauffage de surface selon une ou plusieurs des revendications précédentes, **caractérisé en ce que** le dispositif conducteur chauffant (11) possède un conducteur de protection (18).

10. Arrangement de chauffage de surface selon la revendication 1, **caractérisé en ce qu'**un marquage imprimé ou une identification en couleur est présent(e) du côté extérieur du dispositif conducteur chauffant (11) ou de son isolation de brins (22) en vue de différencier les différentes valeurs de puissance de chauffage.
